# EUROPÄISCHE PATENTSCHRIFT

(11) **EP 2 185 815 B1**
(45) Veröffentlichungstag und Bekanntmachung des Hinweises auf die Patenterteilung: **22.06.2011**
(21) Anmeldenummer: 08801074.9
(22) Anmeldetag: 24.07.2008
(51) Int. Cl.: F03D 11/00

(54) **ROTORLAGERUNG FÜR EINE WINDENERGIEANLAGE**
ROTOR BEARING FOR A WIND TURBINE
PALIER DE ROTOR POUR UNE ÉOLIENNE

(30) Priorität: 31.08.2007 DE 102007041508
(43) Veröffentlichungstag der Anmeldung: 19.05.2010
(73) Patentinhaber: Schaeffler Technologies GmbH & Co. KG, 91074 Herzogenaurach (DE)
(72) Erfinder: LÖSCHNER, Tim, 97072 Würzburg (DE); ZEIDLHACK, Rudolf, 97440 Werneck-Essleben (DE)
(86) Internationale Anmeldenummer: PCT/DE2008/001236
(87) Internationale Veröffentlichungsnummer: WO 2009/030189

(56) Entgegenhaltungen:
- EP-A- 1 431 575
- EP-A- 1 717 489
- WO-A-03/031812
- WO-A-2005/050059
- WO-A-2006/053940
- WO-A-2008/113318

## Beschreibung

### Gebiet der Erfindung

Die Erfindung betrifft eine Rotorlagerung für eine Windenergieanlage nach den oberbegriffsbildenden Merkmalen des Patentanspruchs 1, und sie ist insbesondere vorteilhaft an Windenergieanlagen mit einem in einem Hauptlager gelagertem Rotor und einem nachgeschalteten Planetengetriebe realisierbar.

### Hintergrund der Erfindung

Eine derartige Windenergieanlage ist gattungsbildend beispielsweise aus der WO 03/031812, aus der WO 03/014 567 A1 oder aus der US 6.872.049 B2 vorbekannt. Die in diesen Druckschriften offenbarten Windenergieanlagen bestehen im Wesentlichen jeweils aus einem drehbar auf einem Maschinenturm gelagerten Maschinenhaus mit einem Generator zur Stromerzeugung, einem windgetriebenen Rotor mit einer mindestens zwei Rotorblätter tragenden Rotornabe und einem den Rotor tragenden Großwälzlager. Das Großwälzlager ist dabei zumeist als zweireihiges Kegelrollenlager ausgebildet und weist einen drehfest am Maschinenhaus befestigten und koaxial zur Rotornabe angeordneten ersten Lagerring sowie einen verdrehbar am ersten Lagerring gehaltenen und an der Rotornabe befestigten zweiten Lagerring auf, zwischen denen eine Vielzahl als Kegelrollen ausgebildeter Wälzkörper abrollen. Darüber hinaus steht das Großwälzlagers mit einem mit dem Generator im Maschinenhaus verbundenen und in bekannter Weise aus einem Hohlrad mit einer umlaufenden Innenverzahnung, mehreren auf Planetenträgern gelagerten Planetenrädern sowie aus einem zentralen Sonnenrad bestehenden Planetengetriebe in Verbindung, indem der innere der beiden Lagerringe des Großwälzlagers durch eine Pressverbindung auf der Außenmantelfläche des Hohlrades des Planetengetriebes befestigt ist.

Durch die EP 811 764 A1 ist es darüber hinaus auch bekannt, die Verbindung des Großwälzlagers mit dem Planetengetriebe derart zu realisieren, dass der innere der beiden Lagerringe des Großwälzlagers auf einen mit der Rotornabe verbundenen und die Planetenträger tragenden Ring aufgepresst ist.

Nachteilig bei solchen Rotorlagerungen ist es jedoch, dass das Großwälzlager und das nachgeschaltete Planetengetriebe aus relativ vielen Einzelteilen bestehen und dadurch einerseits in ihrer Herstellung sehr kostenintensiv sind und andererseits ein hohes Gesamtgewicht aufweisen, das sich bei deren Montage im Maschinenhaus in bis zu 120 m Höhe sehr nachteilig auswirkt. Darüber hinaus müssen sowohl das Hohlrad des Planetengetriebes als auch der innere Lagerring des Großwälzlagers, die zumeist einen Außen- bzw. Innendurchmesser von über 2,00 m aufweisen, trotz ihrer Größe äußerst präzise gefertigt werden, um die aus einem positiven Passungsübermaß bzw. aus einer zu strammen Passung bei der Pressverbindung zwischen dem inneren Lagerring und dem Hohlrad entstehenden negativen Einflüsse auf die Funktion der Lagerstelle oder auf die Verzahnung des Planetengetriebes mit Sicherheit ausschließen zu können. So kann eine solche zu stramme Passung einerseits dazu führen, dass der innere Lagerring des Großwälzlagers bei dessen Montage auf dem Hohlrad geringfügig aufgeweitet und das eingestellte Radialspiel des Großwälzlagers zu gering wird, so dass sich die Reibung zwischen den Wälzkörpern und deren Laufbahnen in den Lagerringen übermäßig erhöht. Dies hätte zur Folge, dass die zulässige Betriebstemperatur des Großwälzlagers überschritten wird, es zum teilweisen Verbrennen des Schmierstoffes und damit zu Mangelschmierung im Großwälzlager kommt und das Großwälzlager letztendlich vorzeitig ausfällt. Andererseits ist es auch möglich, dass die zu stramme Passung zwischen dem inneren Lagerring des Großwälzlagers und dem Hohlrad des Planetengetriebes zu einer geringfügigen Einschnürung des Hohlrades führt, so dass sich die Kontaktpunkte zwischen der Innenverzahnung des Hohlrades und den Verzahnungen der Planetenräder des Planetengetriebes verändern, mit der Folge, dass keine definierte Kraftübertragung mehr innerhalb des Planetengetriebes erfolgt und es im ungünstigsten Fall zum Zahnbruch an einer der Verzahnungen kommt.

### Aufgabe der Erfindung

Ausgehend von den dargelegten Nachteilen der Lösungen des bekannten Standes der Technik liegt der Erfindung deshalb die Aufgabe zu Grunde, eine Rotorlagerung für eine Windenergieanlage zu konzipieren, die kompakt und gewichtsreduziert ausgebildet ist und sich durch eine geringere Anzahl an Einzelteilen am Großwälzlager und am nachgeschalteten Planetengetriebe auszeichnet und bei der die aus einem positiven Passungsübermaß bei der Pressverbindung zwischen dem inneren Lagerring des Großwälzlagers und dem Hohlrad des Planetengetriebes entstehenden negativen Einflüsse auf die Funktion der Lagerstelle oder auf die Verzahnung des Planetengetriebes mit Sicherheit ausgeschlossen sind.

### Beschreibung der Erfindung

Erfindungsgemäß wird diese Aufgabe bei einer Rotorlagerung nach dem Oberbegriff des Anspruchs 1 derart gelöst, dass der radial innere der beiden Lagerringe des Großwälzlagers zugleich das Hohlrad des mit dem Generator verbundenen Planetengetriebes bildet, indem dessen Innenseite mit der umlaufenden Innenverzahnung des Hohlrades ausgebildet ist.

Der Erfindung liegt somit die Erkenntnis zugrunde, dass die gestellte Aufgabe in einfacher Weise dadurch lösbar ist, dass anstelle einer aufwändigen Pressverbindung zwischen dem Hohlrad des Planetengetriebes und dem inneren Lagerring des Großwälzlagers beide ringförmige Bauteile durch Integration miteinander nur noch durch ein einziges kosten- und gewichtreduziertes Bauteil gebildet werden, bei dem negative Passungseinflüsse auf die Lagerstelle oder auf die Verzahnung des Planetengetriebes gar nicht erst auftreten können.

Bevorzugte Ausgestaltungen und Weiterbildungen der erfindungsgemäß ausgebildeten Rotorlagerung werden in den Unteransprüchen beschrieben.

Danach ist es gemäß Anspruch 2 bei der erfindungsgemäß ausgebildeten Rotorlagerung vorgesehen, dass das Großwälzlager in einer ersten Ausführungsform bevorzugt als zwei Reihen nebeneinander angeordnete Kegelrollen als Wälzkörper aufweisendes Kegelrollenlager ausgebildet ist, dessen die Innenverzahnung aufweisender innerer Lagerring axial asymmetrisch in zwei Teilringe getrennt ist.

Nach Anspruch 3 ist es jedoch auch alternativ möglich, das Großwälzlager der erfindungsgemäß ausgebildeten Rotorlagerung in einer zweiten Ausführungsform als zwei Reihen nebeneinander angeordnete Lagerkugeln als Wälzkörper aufweisendes Schrägkugellager auszubilden, dessen die Innenverzahnung aufweisender innerer Lagerring ebenfalls axial asymmetrisch in zwei Teilringe getrennt ist.

Die Ausbildung des Großwälzlagers als zweireihiges Kegelrollenlager stellt dabei die in der Praxis bevorzugte Ausführungsform dar, da diese Lagerart grundsätzlich über höhere Tragzahlen bzw. über eine höhere Leistungsdichte verfügt. Sollen jedoch Großwälzlager mit größeren Durchmessern eingesetzt werden, bei denen die Leistungsdichte nicht mehr das ausschlaggebende Kriterium darstellt, ist es durchaus eine technisch vertretbare Alternative, diese auch als zweireihige Schrägkugellager auszubilden. Dabei kann bei beiden Lagerarten sowohl der innere als auch der äußere Lagerring entweder drehfest am Maschinenhaus bzw. am Maschinenträger befestigt oder auch mit der Rotornabe des Rotors verbunden sein, wobei die axial asymmetrische Trennung des inneren Lagerrings beider Ausführungsformen in zwei Teilringe in erster Linie zur leichteren Montagefähigkeit des Großwälzlagers notwendig ist.

Unabhängig von den zuvor beschriebenen Ausführungsformen ist es nach Anspruch 4 ein weiteres Merkmal der erfindungsgemäß ausgebildeten Rotorlagerung, dass der innere Lagerring durch die asymmetrische Teilung aus einem die komplette Innenverzahnung an seiner Innenseite aufweisenden ersten Teilring und aus einem auf diesem Teilring durch eine Pressverbindung befestigten zweiten Teilring besteht. Dadurch hat die asymmetrische Teilung des inneren Lagerrings neben der leichteren Montagefähigkeit des Großwälzlagers zugleich den Vorteil, dass die Innenverzahnung komplett in einen der Teilringe eingearbeitet werden kann und dadurch kostengünstiger herstellbar ist. Besonders vorteilhaft hat es sich dabei erwiesen, wenn der zweite Teilring komplett eine der beiden Laufbahnen für die Wälzkörper des Großwälzlagers bildet, wobei jedoch auch andere asymmetrische Teilungen des inneren Lagerringes denkbar sind.

Ausgehend von den vorbeschriebenen Merkmalen zeichnet sich die erfindungsgemäßen Rotorlagerung nach Anspruch 5 desweiteren noch dadurch aus, dass die Innenverzahnung an der Innenseite des ersten Teilrings des inneren Lagerrings wahlweise als durchgehende Gerad- oder Schrägverzahnung oder als in einer axial mittigen Trennnut jeweils zueinander verlaufende Doppelschräg- bzw. Pfeilverzahnung ausgebildet ist.

Die Ausbildung der Innenverzahnung als Geradverzahnung stellt dabei eher eine konventionelle Möglichkeit dar, die vor allem vor dem Erkennen der durch diese erzeugten Lärm- und Schallemissionen zur Anwendung kam. Dennoch ist eine solche Geradverzahnung im Hinblick auf deren günstige Fertigungskosten nach wie vor interessant, vor allem wenn diese in Kombination mit modernen Schalldämmungsmaßnahmen zur Anwendung kommt.

Neuere Getriebekonzepte sehen jedoch in aller Regel eine Schrägverzahnung für alle Räder des Planetengetriebes vor, da bei dieser Verzahnung ein Schrägungswinkel gewählt werden kann, der gegenüber einer Geradverzahnung einen wesentlich höheren Überdeckungsgrad in der Verzahnung erzeugt, so dass Vibrationen und Geräusche im Windbetrieb deutlich verringert werden. Außerdem kann die Verzahnung bis zum Doppelten der Zahnlänge einer Geradverzahnung ausgelegt werden, so dass eine wesentlich höhere Momentübertragung bei gleichem Bauraumbedarf möglich ist. Zusätzlich bietet die Schrägverzahnung die Möglichkeit der Kompensierung von äußeren Axialkräften, indem die Schrägungsrichtung der Verzahnung entsprechend der Richtung der wirkenden äußeren Axialkräfte festgelegt wird.

Die mit Abstand größten Vorteile bietet jedoch ein Planetengetriebe, bei dem sowohl das Hohlrad als auch die Planetenräder und das Sonnenrad mit einer Doppelschräg- oder Pfeilverzahnung ausgebildet sind. Die Besonderheit einer solchen Doppelschräg- oder Pfeilverzahnung ist dabei der hohe Überdeckungsgrad der Verzahnung, der einen ruhigen und vibrationsarmen Betrieb des Planetengetriebes ermöglicht. Die durch die entgegengerichteten Schrägverzahnungen entstehenden zweiseitigen Axialkräfte sind dabei derart gerichtet, dass sie sich gegenseitig aufheben, so dass eine optimale Lastübertragung gewährleistet ist. Darüber hinaus ist es bei einer Doppelschräg- oder Pfeilverzahnung besonders vorteilhaft, dass durch die axial bewegliche Lagerung der Planetenräder eventuell bei der Verzahnungsfertigung am inneren Lagerring entstehende Fluchtungsfehler zwischen den beiden Verzahnungsbereichen ausgeglichen werden, da die Planetenräder sich durch den Verzahnungsvenauf selbsttätig zentrieren.

Eine zweckmäßige Weiterbildung der erfindungsgemäß ausgebildeten Rotorlagerung ist es nach Anspruch 6 darüber hinaus, dass zur Einstellbarkeit des Axialspiels des Großwälzlagers zwischen den beiden Teilringen des inneren Lagerrings bevorzugt ein Distanzring mit ermittelter definierter Breite angeordnet ist. Der Distanzring weist dabei bevorzugt den gleichen Innendurchmesser wie der zweite Teilring des inneren Lagerrings auf und wird vor dem zweiten Teilring ebenfalls auf den ersten Teilring aufgeschoben.

Als alternative Möglichkeit zur Einstellbarkeit des Axialspiels des Großwälzlagers der erfindungsgemäß ausgebildeten Rotorlagerung wird es durch Anspruch 7 schließlich noch vorgeschlagen, dass zusätzlich auch der äußere Lagerring des Großwälzlagers, jedoch axial symmetrisch, in zwei Teilringe getrennt ist, zwischen denen ein Distanzring mit ermittelter definierter Breite angeordnet ist. Hierbei ist es besonders vorteilhaft, wenn der Distanzring zwischen den Teilringen des äußeren Lagerrings die gleiche Radialhöhe wie die Teilringe aufweist, wobei es jedoch auch möglich ist, den Distanzring in einer in die aneinander anliegenden Axialflächen der beiden Teilringe eingearbeiteten Ringnut derart anzuordnen, dass die Teilringe einen geringfügigen Abstand zueinander und/ oder eine zusätzliche formschlüssige Verbindung miteinander aufweisen.

Eine andere geeignete Maßnahme zur Axialspieleinstellung des als Kegelrollen- oder Schrägkugellager ausgebildeten Großwälzlagers wäre es alternativ auch, zumindest den zweiten Teilring des inneren Lagerrings durch Schleifen seiner dem ersten Teilring zugewandten Axialseite mit einer definierten Breite auszubilden. Denkbar wäre es jedoch auch, die zueinander weisenden Axialseiten beider Teilringe entsprechend spanend zu bearbeiten oder durch Beschichtungen deren Axialmaß zu beeinflussen. Da eine solche Bearbeitung fertigungstechnisch jedoch relativ aufwändig und kostenintensiv ist, hat sich die Axialspieleinstellung über einen Distanzring sowohl aus Kostengründen als auch dadurch am vorteilhaftesten erwiesen, dass hierbei auch eventuelle Bearbeitungsfehler in der Breite des Distanzringes durch den Austausch gegen einen passenden Distanzring relativ einfach ausgleichbar sind.

Zusammenfassend weist die erfindungsgemäß ausgebildete Rotorlagerung somit gegenüber den aus dem Stand der Technik bekannten Rotorlagerungen den Vorteil auf, dass das Großwälzlager wie bisher alle auf den Rotor wirkenden Kräfte und Momente aufnehmen kann und gleichzeitig durch die in den inneren Lagerring integrierte Verzahnung des Hohlrades des nachgeschalteten Planetengetriebes die Funktion dieses Hohlrades übernimmt. Dadurch ist die erfindungsgemäße Rotorlagerung kompakt und gewichtsreduziert ausgebildet und zeichnet sich durch eine geringere Anzahl an Einzelteilen am Großwälzlager und am Planetengetriebe aus. Darüber hinaus bewirkt die Einteiligkeit von inneren Lagerring und Hohlrad, dass die bisher aus einem positiven Passungsübermaß bei der Pressverbindung zwischen dem inneren Lagerring und dem Hohlrad entstehenden negativen Einflüsse auf die Funktion der Lagerstelle oder auf die Verzahnung des Planetengetriebes mit Sicherheit ausgeschlossen sind.

### Kurze Beschreibung der Zeichnungen

Die erfindungsgemäß ausgebildete Rotorlagerung wird nachfolgend in mehreren bevorzugten Ausführungsformen unter Bezugnahme auf die beigefügten Zeichnungen näher erläutert. Dabei zeigen:
- Figur 1: die schematische Darstellung einer Windenergieanlage mit er- findungsgemäß ausgebildeter Rotorlagerung;
- Figur 2: die vergrößerte Darstellung der Einzelheit X gemäß Figur 1 mit einer ersten Variante der Rotornaben-Großwälzlager-Befesti- gung der erfindungsgemäß ausgebildeter Rotorlagerung;
- Figur 3: die vergrößerte Darstellung der Einzelheit X gemäß Figur 1 mit einer zweiten Variante der Rotornaben-Großwälzlager-Befesti- gung der erfindungsgemäß ausgebildeter Rotorlagerung;
- Figur 4: eine Teilansicht eines Querschnittes durch eine erste Ausfüh- rungsform des Großwälzlagers der erfindungsgemäß ausgebil- deter Rotorlagerung;
- Figur 5: eine Teilansicht eines Querschnittes durch eine zweite Ausfüh- rungsform des Großwälzlagers der erfindungsgemäß ausgebil- deter Rotorlagerung;
- Figur 6: eine Teilansicht eines Querschnittes durch eine dritte Ausfüh- rungsform des Großwälzlagers der erfindungsgemäß ausgebil- deter Rotorlagerung;
- Figur 7: eine Teilansicht eines Querschnittes durch eine vierte Ausfüh- rungsform des Großwälzlagers der erfindungsgemäß ausgebil- deter Rotorlagerung.

### Ausführliche Beschreibung der Zeichnungen

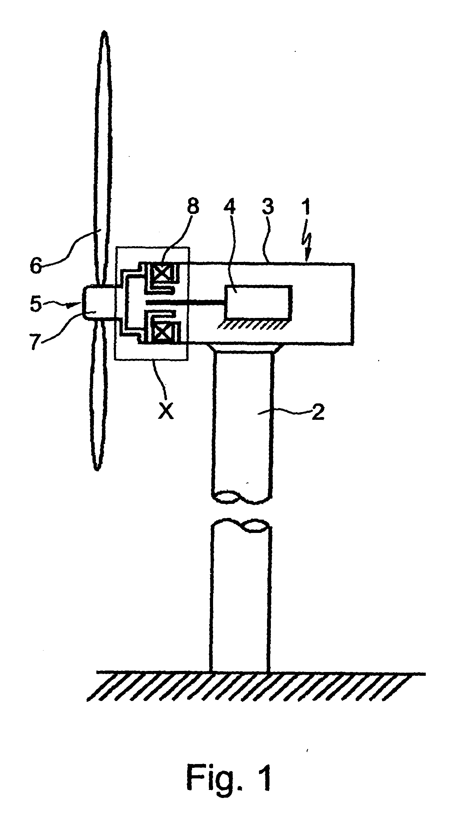

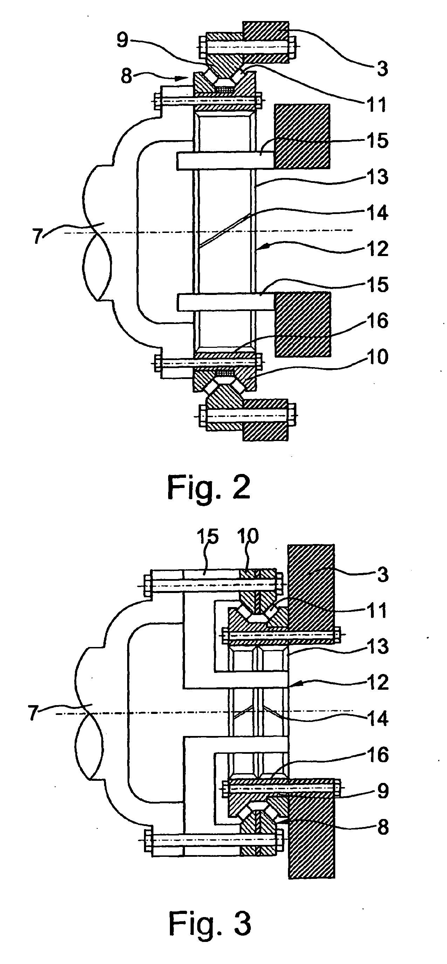

In Figur 1 ist schematisch eine Windenergieanlage 1 dargestellt, die im Wesentlichen aus einem drehbar auf einem Maschinenturm 2 gelagerten Maschinenhaus 3 mit einem Generator 4 zur Stromerzeugung sowie einem windgetriebenen Rotor 5 mit einer mindestens zwei Rotorblätter 6 tragenden Rotornabe 7 und einem den Rotor 5 tragenden Großwälzlager 8 besteht. Das Großwälzlager 8 weist dabei, wie die Figuren 2 und 3 zeigen, einen drehfest am Maschinenhaus 3 befestigten und koaxial zur Rotornabe 7 angeordneten ersten Lagerring 9 sowie einen verdrehbar am ersten Lagerring 9 gehaltenen und an der Rotornabe 7 befestigten zweiten Lagerring 10 auf, wobei der mit dem Maschinenhaus 3 verbundene erste Lagerring 9 entweder wie bei der in Figur 2 dargestellten ersten Variante durch den Außenring oder wie bei der in Figur 3 dargestellten zweiten Variante durch den Innenring des Großwälzlagers 8 gebildet wird und der am Rotor 5 befestigte zweite Lagerring 10 dementsprechend ebenfalls entweder als Innenring oder als Außenring ausgebildet ist. Ebenso geht aus den Figuren 2 und 3 hervor, dass das Großwälzlager 1 eine Vielzahl zwischen den Lagerringen 9, 10 abrollender Wälzkörper 11 aufweist und mit einem nachgeschalteten, mit dem Generator 4 verbundenen Planetengetriebe 12 in Verbindung steht, das in bekannter Weise aus einem Hohlrad 13 mit einer umlaufenden Innenverzahnung 14, mehreren auf Planetenträgern 15 gelagerten und nicht näher dargestellten Planetenrädern sowie aus einem ebenfalls nicht näher dargestellten zentralen Sonnenrad besteht.

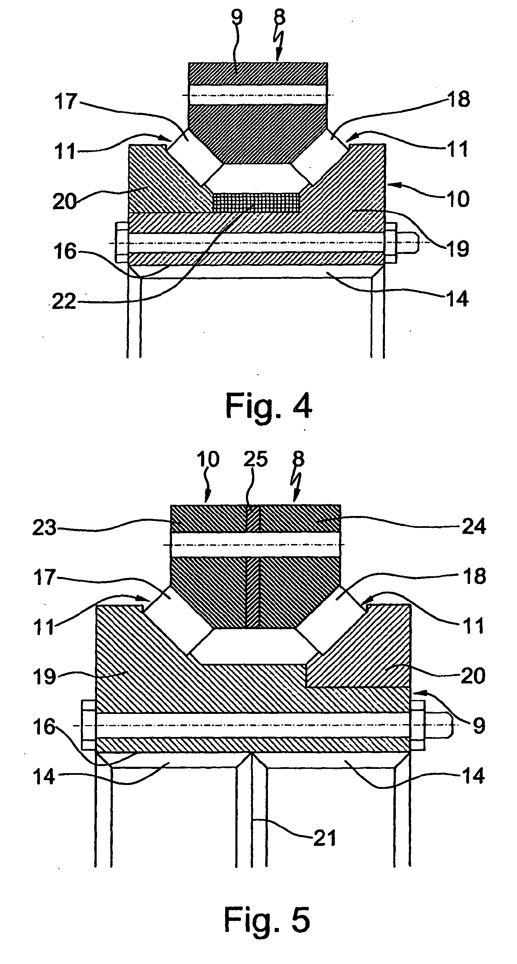

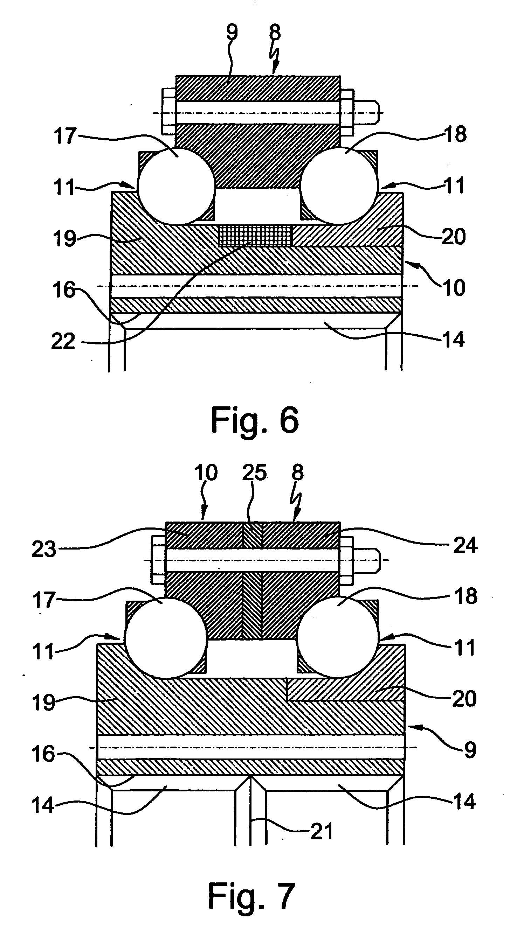

Darüber hinaus ist den Darstellungen der Figuren 2 und 3 auch entnehmbar, dass der jeweils den Innenring bildende Lagerring 9 oder 10 des Großwälzlagers 8 erfindungsgemäß zugleich das Hohlrad 13 des mit dem Generator 4 verbundenen Planetengetriebes 12 bildet, indem dessen Innenseite 16 mit der umlaufenden Innenverzahnung 14 des Hohlrades 13 ausgebildet ist. Das Großwälzlager 8 kann dabei entweder, wie in den Figuren 4 und 5 dargestellt, als zwei Reihen 17, 18 nebeneinander angeordnete Kegelrollen als Wälzkörper 11 aufweisendes Kegelrollenlager oder, wie in den Figuren 6 und 7 dargestellt, als zwei Reihen 17, 18 nebeneinander angeordnete Lagerkugeln als Wälzkörper 11 aufweisendes Schrägkugellager ausgebildet sein, wobei dessen die Innenverzahnung 14 aufweisender innerer Lagerring 9 oder 10 jeweils axial asymmetrisch in zwei Teilringe 19, 20 getrennt ist, um in erster Linie eine leichte Montagefähigkeit des Großwälzlagers 8 zu gewährleisten. Durch die asymmetrische Teilung besteht der innere Lagerring 9 oder 10 dann aus einem die komplette Innenverzahnung 14 an seiner Innenseite 16 aufweisenden ersten Teilring 19 und aus einem auf diesem Teilring 19 durch eine Pressverbindung befestigten zweiten Teilring 20, der komplett eine der beiden Laufbahnen für die Wälzkörper 11 des Großwälzlagers 8 bildet.

Desweiteren geht aus den Figuren 2 und 3 zumindest andeutungsweise hervor, dass die Innenverzahnung 14 an der Innenseite 16 des ersten Teilringes 19 des inneren Lagerrings 9 oder 10 entweder, wie in Figur 2, als durchgehende Schrägverzahnung oder, wie in Figur 3, als in einer axial mittigen Trennnut 21 jeweils zueinander verlaufende Doppelschräg- bzw. Pfeilverzahnung ausgebildet ist. Die Schrägverzahnung weist dabei einen derartigen Schrägungswinkel auf, dass ein hoher Überdeckungsgrad in der Innenverzahnung 14 erzeugt wird, durch den störende Vibrationen und Geräusche im Windbetrieb deutlich verringert werden. Durch die Doppelschräg- bzw. Pfeilverzahnung entstehen dagegen wandernde Lasteingriffspunkte, die für eine sehr gleichmäßige Lastverteilung im Planetengetriebe 12 ursächlich sind und ebenfalls eine deutliche Verringerung von Vibrationen und Geräuschen im Windbetrieb bewirken, wobei die aus der entgegengerichteten Verzahnungsform entstehenden zweiseitigen Axialkräfte sich gegenseitig aufheben und daher eine optimale Lastübertragung gewährleisten.

Die vergrößerten Darstellungen des Großwälzlagers 8 gemäß den Figuren 4 und 6 verdeutlichen schließlich noch, dass zur Einstellbarkeit des Axialspiels des als zweireihiges Kegelrollen- oder Schrägkugellager ausgebildeten Großwälzlagers 8 zwischen den beiden Teilringen 19, 20 des inneren Lagerrings 9 oder 10 bevorzugt ein Distanzring 22 mit ermittelter definierter Breite angeordnet ist. Der Distanzring 22 weist dabei deutlich sichtbar den gleichen Innendurchmesser wie der zweite Teilring 20 des inneren Lagerrings 9 oder 10 auf und wird vor dem zweiten Teilring 20 ebenfalls auf den ersten Teilring 19 aufgeschoben in. Alternativ dazu ist es jedoch auch möglich, die Einstellbarkeit des Axialspiels des Großwälzlagers 8, wie in den Figuren 5 und 7 dargestellt, durch eine axial symmetrische Teilung des äußeren Lagerrings 10 oder 9 in zwei Teilringe 23, 24 zu realisieren, indem zwischen diesen Teilringen 23, 24 ein Distanzring 25 mit ermittelter definierter Breite angeordnet wird. Bei dieser Ausbildung ist es besonders vorteilhaft, wenn der Distanzring 25 zwischen den Teilringen 23, 24 des äußeren Lagerrings 10 oder 9 die gleiche Radialhöhe wie die Teilringe 23, 24 aufweist, wobei es jedoch auch möglich ist, den Distanzring 25 in nicht näher dargestellter Weise in einer in die aneinander anliegenden Axialflächen der beiden Teilringe 23, 24 eingearbeiteten Ringnut derart anzuordnen, dass die Teilringe 23, 24 einen geringfügigen Abstand zueinander und eine zusätzliche formschlüssige Verbindung miteinander aufweisen.

### Bezugszahlenliste

- 1: Windenergieanlage
- 2: Maschinenturm
- 3: Maschinenhaus
- 4: Generator
- 5: Rotor
- 6: Rotorblätter
- 7: Rotornabe
- 8: Großwälzlager
- 9: erster Lagerring von 8
- 10: zweiter Lagerring von 8
- 11: Wälzkörper von 8
- 12: Planetengetriebe
- 13: Hohlrad von 12
- 14: Innenverzahnung von 13
- 15: Planetenträger von 12
- 16: Innenseite von 9 bzw. 10
- 17: erste Reihe von 11
- 18: zweite Reihe von 11
- 19: Teilring von 9 bzw. 10
- 20: Teilring von 9 bzw. 10
- 21: Trennnut
- 22: Distanzring zwischen 19, 20
- 23: Teilring von 10 bzw. 9
- 24: Teilring von 10 bzw.
- 25: Distanzring zwischen 23, 24

## Patentansprüche

1. Rotorlagerung für eine Windenergieanlage (1), im Wesentlichen bestehend aus einem drehbar auf einem Maschinenturm (2) gelagerten Maschinenhaus (3) mit einem Generator (4) zur Stromerzeugung, einem windgetriebenen Rotor (5) mit einer mindestens zwei Rotorblätter (6) tragenden Rotornabe (7) und einem den Rotor (5) tragenden Großwälzlager (8), das einen drehfest am Maschinenhaus (3) befestigten und koaxial zur Rotornabe (7) angeordneten ersten Lagerring (9) sowie einen verdrehbar am ersten Lagerring (9) gehaltenen und an der Rotornabe (7) befestigten zweiten Lagerring (10) sowie eine Vielzahl zwischen den Lagerringen (9, 10) abrollender Wälzkörper (11) aufweist und mit einem nachgeschalteten, mit dem Generator (4) verbundenen Planetengetriebe (12) in Verbindung steht, das aus einem Hohlrad (13) mit einer umlaufenden Innenverzahnung (14), mehreren auf Planetenträgern (15) gelagerten Planetenrädern und aus einem zentralen Sonnenrad besteht, **dadurch gekennzeichnet, dass** der radial innere der beiden Lagerringe (9 oder 10) des Großwälzlagers (8) zugleich das Hohlrad (13) des mit dem Generator (4) verbundenen Planetengetriebes (12) bildet, indem dessen Innenseite (16) mit der umlaufenden Innenverzahnung (14) des Hohlrades (13) ausgebildet ist.

2. Rotorlagerung nach Anspruch 1, **dadurch gekennzeichnet, dass** das Großwälzlager (8) bevorzugt als zwei Reihen (17, 18) nebeneinander angeordnete Kegelrollen als Wälzkörper (11) aufweisendes Kegelrollenlager ausgebildet ist, dessen die Innenverzahnung (14) aufweisender innerer Lagerring (9 oder 10) axial asymmetrisch in zwei Teilringe (19, 20) getrennt ist.

3. Rotorlagerung nach Anspruch 1, **dadurch gekennzeichnet, dass** das Großwälzlager (8) bevorzugt als zwei Reihen (17, 18) nebeneinander angeordnete Lagerkugeln als Wälzkörper (11) aufweisendes Schrägkugellager ausgebildet ist, dessen die Innenverzahnung (14) aufweisender innerer Lagerring (9 oder 10) axial asymmetrisch in zwei Teilringe (19, 20) getrennt ist.

4. Rotorlagerung nach Anspruch 2 oder 3, **dadurch gekennzeichnet, dass** der innere Lagerring (9 oder 10) durch die asymmetrische Teilung aus einem die komplette Innenverzahnung (14) an seiner Innenseite (16) aufweisenden ersten Teilring (19) und aus einem auf diesem Teilring (19) durch eine Pressverbindung befestigten zweiten Teilring (20) besteht.

5. Rotorlagerung nach Anspruch 4, **dadurch gekennzeichnet, dass** die Innenverzahnung (14) an der Innenseite (16) des ersten Teilrings (19) des inneren Lagerrings (9 oder 10) wahlweise als durchgehende Gerad- oder Schrägverzahnung oder als in einer axial mittigen Trennnut (21) jeweils zueinander verlaufende Doppelschräg- bzw. Pfeilverzahnung ausgebildet ist.

6. Rotorlagerung nach Anspruch 5, **dadurch gekennzeichnet, dass** zur Einstellbarkeit des Axialspiels des Großwälzlagers (8) zwischen den beiden Teilringen (19, 20) des inneren Lagerrings (9 oder 10) bevorzugt ein vor dem zweiten Teilring (20) auf den ersten Teilring (19) aufgeschobener Distanzring (22) mit ermittelter definierter Breite angeordnet ist.

7. Rotorlagerung nach Anspruch 5, **dadurch gekennzeichnet, dass** zur Einstellbarkeit des Axialspiels des Großwälzlagers (8) zusätzlich der äußere Lagerring (10 oder 9) axial symmetrisch in zwei Teilringe (23, 24) getrennt ist, zwischen denen ein die gleiche Radialhöhe wie die Teilringe (23, 24) aufweisender Distanzring (25) mit ermittelter definierter Breite angeordnet ist.

## Claims

1. Rotor bearing for a wind energy installation (1), essentially comprising a machine housing (3), which is mounted on a machine tower (2) such that it can rotate, having a generator (4) for electricity production, having a wind-driven rotor (5) with a rotor hub (7) to which at least two rotor blades (6) are fitted, and having a large roller bearing (8), which supports the rotor (5) and which has a first bearing ring (9), which is attached in a rotationally fixed manner to the machine housing (3) and is arranged coaxially with respect to the rotor hub (7), as well as a second bearing ring (10), which is held on the first bearing ring (9) such that it can rotate and is attached to the rotor hub (7), and having a multiplicity of roller bodies (11) which roll between the bearing rings (9, 10), and is connected to a downstream epicyclic gearbox (12), which is connected to the generator (4) and comprises a hollow wheel (13) with a circumferential internal tooth system (14), a plurality of planet wheels mounted on planet supports (15), and a central sun wheel, **characterized in that** the radially inner of the two bearing rings (9 or 10) of the large roller bearing (8) at the same time forms the hollow wheel (13) of the epicyclic gearbox (12) which is connected to the generator (4), **in that** its inner face (16) is formed with the circumferential internal tooth system (14) of the hollow wheel (13).

2. Rotor bearing according to Claim 1, **characterized in that** the large roller bearing (8) is preferably in the form of two rows (17, 18) of conical roller bearings which are arranged alongside one another and have conical rollers as roller bodies (11), the inner bearing ring (9 or 10) of which, which has the internal tooth system (14), is separated axially asymmetrically into two ring elements (19, 20).

3. Rotor bearing according to Claim 1, **characterized in that** the large roller bearing (8) is preferably formed from two rows (17, 18) of inclined ball bearings which are arranged alongside one another and have bearing balls as roller bodies (11), the inner bearing ring (9 or 10) of which, which has the internal tooth system (14), is separated axially asymmetrically into two ring elements (19, 20).

4. Rotor bearing according to Claim 2 or 3, **characterized in that**, as a result of the asymmetric subdivision, the inner bearing ring (9 or 10) comprises a first ring element (19), which has the complete internal tooth system (14) on its inner face (16), and a second ring element (20), which is mounted on this ring element (19) by a push fit.

5. Rotor bearing according to Claim 4, **characterized in that** the internal tooth system (14) on the inner face (16) of the first ring element (19) of the inner bearing ring (9 or 10) is optionally in the form of a continuous straight or inclined tooth system, or a double-inclined or arrow tooth system, in each case running parallel to one another in an axially central separating groove (21).

6. Rotor bearing according to Claim 5, **characterized in that** a spacer ring (22), which is pushed onto the first ring element (19) before the second ring element (20), is preferably arranged with a determined defined width between the two ring elements (19, 20) of the inner bearing ring (9 or 10), in order to make it possible to adjust the axial play of the large roller bearing (8).

7. Rotor bearing according to Claim 5, **characterized in that** the outer bearing ring (10 or 9) is additionally separated axially symmetrically into two ring elements (23, 24) in order to allow the axial play of the large roller bearing (8) to be adjusted, between which ring elements (23, 24) a spacer ring (25) is arranged which is of the same radial height as the ring elements (23, 24) and has a determined defined width.

## Revendications

1. Palier de rotor pour une éolienne (1), se composant essentiellement d'une nacelle (3) montée de façon rotative sur une tour (2), avec un générateur (4) pour la production de courant, avec un rotor (5) entraîné par le vent avec un moyeu de rotor (7) portant au moins deux pales de rotor (6), et avec un gros palier de roulement (8) portant le rotor (5), qui présente une première bague de palier (9) disposée coaxialement au moyeu de rotor (7) et fixée de façon immobile en rotation à la nacelle (3) ainsi qu'une deuxième bague de palier (10) fixée au moyeu de rotor (7) et maintenue de façon rotative sur la première bague de palier (9), ainsi qu'une multiplicité de corps de roulement (11) roulant entre les bagues de palier (9, 10), et qui est en liaison avec un engrenage planétaire (12) qui suit et qui est relié au générateur (4), et qui est composé d'une roue creuse (13) munie d'une denture intérieure périphérique (14), de plusieurs roues planétaires montées sur des supports planétaires (15) et d'une roue solaire centrale, **caractérisé en ce que** la bague radialement intérieure des deux bagues de palier (9 ou 10) du gros palier de roulement (8) forme également la roue creuse (13) de l'engrenage planétaire (12) relié au générateur (4), en ce sens que le côté intérieur (16) de celui-ci est réalisé avec la denture intérieure périphérique (14) de la roue creuse (13).

2. Palier de rotor selon la revendication 1, **caractérisé en ce que** le gros palier de roulement (8) est réalisé de préférence sous la forme d'un roulement à rouleaux coniques présentant comme corps de roulement (11) deux rangées (17, 18) de rouleaux coniques disposés les uns à côté des autres, et dont la bague de palier intérieure (9 ou 10) présentant la denture intérieure (14) est divisée en deux bagues partielles (19, 20) de façon axialement asymétrique.

3. Palier de rotor selon la revendication 1, **caractérisé en ce que** le gros palier de roulement (8) est réalisé de préférence sous la forme d'un roulement à billes à portée oblique présentant comme corps de roulement (11) deux rangées (17, 18) de billes de roulement disposées les unes à côté des autres, et dont la bague de palier intérieure (9 ou 10) présentant la denture intérieure (14) est divisée en deux bagues partielles (19, 20) de façon axialement asymétrique.

4. Palier de rotor selon la revendication 2 ou 3, **caractérisé en ce que** la bague de palier intérieure (9 ou 10) se compose, du fait de la division asymétrique, d'une première bague partielle (19) présentant la denture intérieure complète (14) sur son côté intérieur (16) et d'une deuxième bague partielle (20) fixée sur cette bague partielle (19) par un assemblage à ajustement serré.

5. Palier de rotor selon la revendication 4, **caractérisé en ce que** la denture intérieure (14) sur le côté intérieur (16) de la première bague partielle (19) de la bague de palier intérieure (9 ou 10) est réalisée au choix sous la forme d'une denture droite ou oblique continue ou sous la forme d'une denture oblique double ou à chevrons se rejoignant mutuellement dans une rainure de séparation axialement centrale (21).

6. Palier de rotor selon la revendication 5, **caractérisé en ce qu'**une bague d'écartement (22) de largeur définie déterminée, glissée sur la première bague partielle (19) avant la deuxième bague partielle (20) est de préférence disposée entre les deux bagues partielles (19, 20) de la bague de palier intérieure (9 ou 10) pour le réglage du jeu axial du gros palier de roulement (8).

7. Palier de rotor selon la revendication 5, **caractérisé en ce que**, pour le réglage du jeu axial du gros palier de roulement (8), la bague de palier extérieure (10 ou 9) est en outre divisée de façon axialement symétrique en deux bagues partielles (23, 24), entre lesquelles est disposée une bague d'écartement (25) de largeur définie déterminée présentant la même hauteur radiale que les bagues partielles (23, 24).
